Europäisches Patentamt

European Patent Office

Office européen des brevets

(19)

(11) EP 1 046 066 B1

(12) FASCICULE DE BREVET EUROPEEN

(45) Date de publication et mention
de la délivrance du brevet:
**27.08.2003 Bulletin 2003/35**

(21) Numéro de dépôt: **99947565.0**

(22) Date de dépôt: **13.10.1999**

(51) Int Cl.[7]: **G01V 3/38**, G01V 11/00

(86) Numéro de dépôt international:
**PCT/FR99/02477**

(87) Numéro de publication internationale:
**WO 00/022456 (20.04.2000 Gazette 2000/16)**

(54) **METHODE DE DETECTION DE RUPTURES DANS DES SIGNAUX DIAGRAPHIQUES CONCERNANT UNE ZONE D'UN MILIEU**

VERFAHREN ZUR DETEKTION VON DISKONTINUITÄTEN IN BOHRLOCHMESSSIGNALEN VON EINER ZONE IN EINEM MEDIUM

METHOD FOR DETECTING FRACTURES IN LOGGING SIGNALS CONCERNING A ZONE IN AN ENVIRONMENT

(84) Etats contractants désignés:
**FR GB IT NL**

(30) Priorité: **14.10.1998 FR 9812876**

(43) Date de publication de la demande:
**25.10.2000 Bulletin 2000/43**

(73) Titulaire: **Elf Exploration Production
92400 Courbevoie (FR)**

(72) Inventeurs:
• **RABILLER, Philippe
F-64230 Lescar (FR)**
• **ROBAIL, Frédéric
F-62000 Dainville (FR)**

(74) Mandataire: **Levy, David et al
c/o S.A. FEDIT-LORIOT & AUTRES
CONSEILS EN PROPRIETE INDUSTRIELLE
38, Avenue Hoche
75008 Paris (FR)**

(56) Documents cités:
**US-A- 4 320 469**          **US-A- 4 541 275**
**US-A- 5 663 929**          **US-A- 5 673 191**

• **ANDREAS PROKOPH ET AL.: "Detection of nonstationarities in geological time series : wavelet transform of chaotic and cyclic sequences" COMPUTERS & GEOSCIENCES, vol. 22, no. 10, 1996, pages 1097-1108, XP002091150 cité dans la demande**
• **XIMIN CHEN ET AL.: "Well Log Correlation Based on Wavelet Transform and Knowledge" IEEE INTERNATIONAL CONFERENCE ON INTELLIGENT PROCESSING SYSTEMS,1997, pages 1217-1219, XP002091186**

**Description**

La présente invention concerne une méthode de détection de ruptures dans des signaux diagraphiques concernant une zone d'un milieu, les signaux diagraphiques étant constitués de logs de natures différentes enregistrés pour ladite zone en fonction de la profondeur, et l'application de cette méthode à un recalage en profondeur, desdits logs.

Dans de nombreux domaines, il est nécessaire de corréler rapidement deux ou plusieurs courbes représentant les variations d'une première grandeur en fonction d'une seconde grandeur, pour des besoins de comparaison, d'ajustement, etc.

Les courbes à comparer peuvent être de même nature, c'est-à-dire représenter les variations d'une même première grandeur en fonction d'une même deuxième grandeur, ou de nature différente. Il peut par exemple s'agir des enregistrements d'un même phénomène physique mais décalés dans le temps ou l'espace, ou des enregistrements relatifs à des phénomènes physiques différents ou encore des enregistrements relatifs à un même phénomène physique enregistré par exemple par des méthodes différentes de sorte que leur contenu fréquentiel est différent.

Les corrélations peuvent s'effectuer numériquement. Le résultat obtenu est en général global et peu fiable si on ne fait pas d'hypothèses contraignantes sur les signaux, la méthode consistant alors à choisir entre plusieurs pics d'auto-corrélation. La corrélation peut être effectuée visuellement, par décalage manuel d'une des courbes par rapport à l'autre le long de l'axe de la deuxième grandeur. On recherche ainsi par décalages successifs la similitude optimale sur une ou plusieurs portions de la courbe. Cette méthode permet de tenir compte des connaissances a priori. C'est celle qui est couramment employée en géophysique pour le calage en profondeur ou en temps des horizons sismiques ou pour la corrélation d'enregistrements effectués dans un puits et d'enregistrements sismiques.

Le principal inconvénient d'une telle méthode réside dans la difficulté qu'il y a à comparer des signaux de formes qui peuvent être très différentes, par exemple si leur contenu fréquentiel est différent.

On connaît un procédé d'analyse d'un signal dit procédé d'analyse par ondelettes, permettant de décomposer ledit signal comme une somme de fonctions ondelettes élémentaires $\Psi_{a,b}$, qui vibrent chacune comme des sinusoïdes sur une plage dont la position sur un axe est liée au paramètre b et dont la largeur est liée au paramètre a (fréquence centrale), et qui s'amortissent très fortement à l'extérieur de cette plage. La décomposition d'un signal à l'aide d'une famille de ces ondelettes constitue ce qu'on appelle une analyse "temps-fréquence" car les premières et plus courantes décompositions ont été effectuées sur des enregistrements des variations d'une première grandeur en fonction du temps (la deuxième grandeur). Dans ce cas, la dimension du paramètre b est celle d'un temps et la dimension du paramètre a est la dimension de l'inverse d'un temps, donc d'une fréquence temporelle.

Pour plus d'informations sur la décomposition en ondelettes ou les analyses "temps-fréquence", on se référera à l'article "L'analyse par ondelette" de Yves MEYER et al., paru dans "Pour la Science" de Septembre 1987, à l'ouvrage "Wavelets" de J.N. COMBES et al. aux éditions Springer-Verlag, ou encore à la demande de brevet internationale publiée sous le n° WO 92/18941.

Plusieurs types de fonctions peuvent être utilisés, permettant de définir de nombreuses familles d'ondelettes ayant des propriétés différentes. Celles-ci peuvent être par exemple des gaussiennes, des fonctions créneaux ou triangles, des fonctions réelles ou complexes, orthogonales ou non entre elles. On se référera à l'article cité précédemment pour connaître les contraintes applicables à ces diverses fonctions et à d'autres pour générer des familles d'ondelettes.

Pour une famille d'ondelettes $\Psi_{a,b}$ déterminée, on définit la "transformée en ondelettes" à deux dimensions z et x associée à un enregistrement s(z) selon l'axe z comme la suite des coefficients $C_{a,b}$ correspondant chacun à l'intégrale du produit de l'enregistrement s(z) à analyser par l'ondelette élémentaire d'analyse $\Psi_{a,b}$ selon les valeurs de b suivant l'axe z et les valeurs de a suivant un axe x. Dans le cas où l'on a choisi des ondelettes complexes pour effectuer l'analyse temps-fréquence d'un enregistrement ou d'un signal, il devient possible de définir la partie réelle, la partie imaginaire, le module ou encore la phase de la transformée en ondelettes. Les coefficients $C_{a,b}$ sont calculés par la formule bien connue :

$$C_{a,b} = \int_{-\infty}^{+\infty} s(z)\Psi_{a,b}(z)dz$$

Des méthodes et des dispositifs pour identifier des structures géologiques en utilisant des transformées en ondelettes sont notamment décrits dans les brevets US 5 673 191, US 5 740 036 et US 5 757 309 et dans l'article intitulé "Detection of non stationarites in geological time series : wavelet transform of chaotic and cyclic séquences", de Andreas PROKOPH et al, paru dans Computers and Geosciences, Vol. 22, No. 10, pages 1097-1108, 1996.

Toutefois, ces derniers documents concernent soit des mesures magnétiques et gravitationnelles pour faire la distinction entre les structures géologiques relativement profondes et les structures peu profondes, soit des moyens pour simuler la succession des structures.

La présente invention concerne une méthode de détection de ruptures dans des signaux diagraphiques, qui utilise une analyse par ondelettes desdits signaux.

On sait que l'analyse des signaux diagraphiques obtenus à l'aide de dispositifs bien connus, permet de déterminer la nature minéralogique, la texture, le type de réseau poreux et le contenu fluide des formations traversées par des forages. L'évolution des signaux suivant la profondeur reflète l'évolution des propriétés des formations et permet de retracer leur histoire sédimentaire diagénétique et structurale.

Sur les signaux diagraphiques, il est possible de distinguer des ruptures qui correspondent à des modifications importantes de la nature des formations qui s'effectuent sur un faible intervalle de profondeur.

Des bancs électrofaciologiques peuvent être caractérisés à partir des ruptures repérées sur au moins un des canaux du signal diagraphique. A l'intérieur d'un banc, chaque canal du signal diagraphique montre une variation continue, à une échelle de résolution de profondeur donnée. Les ruptures remarquables sont utilisées par le géologue à des fins de corrélations lithostratigraphiques. Dans certains cas, des corrélations chronostratigraphiques sont possibles en effectuant une interprétation à partir d'un modèle conceptuel de l'évolution des dépôts sédimentaires.

Les spécialistes effectuant l'analyse des signaux diagraphiques, utilisent les ruptures remarquables, dans la première étape de l'interprétation, pour recaler en profondeur les différents signaux enregistrés par les capteurs du dispositif diagraphique qui ne se trouvent pas tous au même moment devant une même formation. De part et d'autre des ruptures, le signal diagraphique est affecté par un effet d'épontes ("shoulder effect" en anglais) sur un intervalle qui dépend de la résolution des dispositifs diagraphiques et du contraste des réponses diagraphiques caractéristiques des formations. Cet effet d'épontes est une source d'erreurs et d'incertitude dans les interprétations.

Les processus actuels d'interprétation des signaux diagraphiques sont basés sur un traitement de chaque échantillon du signal diagraphique indépendamment des échantillons situés au-dessus et au-dessous de l'échantillon traité, la notion de profondeur n'intervenant pas. En conséquence, l'information portée par l'évolution du signal avec la profondeur n'est pas prise en compte. Pour que cette information soit prise en compte, il est nécessaire de définir des ruptures sur le signal diagraphique et des évolutions à l'intérieur des ruptures.

La détermination des ruptures est actuellement effectuée manuellement et elle nécessite un opérateur expérimenté. Le résultat est à la fois subjectif et difficilement reproductible à l'identique. Or, ces ruptures qui correspondent aux limites de bancs ou de formations sont nécessaires à un recalage en profondeur.

Le recalage en profondeur est une étape fondamentale de toute interprétation des logs, car il consiste à remettre à la même profondeur des mesures effectuées par les différents capteurs des dispositifs diagraphiques, qui ne passent pas simultanément devant le même point du puits.

On distingue deux types de recalages :

- les recalages "intra run" qui concernent des mesures enregistrées au cours d'une même remontée d'un ensemble de capteurs liés mécaniquement entre eux ;
- les recalages "entre runs", qui sont facilités en enregistrant toujours une diagraphie ou log commun dans les différents runs, ce log commun étant généralement le log "Gamma ray" qui sert de référence de profondeur.

Un premier recalage est effectué au moment de l'acquisition et ne concerne que les mesures effectuées au cours du même enregistrement. Il n'est satisfaisant que dans les meilleurs cas et nécessite d'être toujours vérifié.

Il existe des stations d'analyse de logs à l'aide desquelles il est possible de faire des recalages. Toutefois, les opérations de recalage restent manuelles ou lorsqu'elles sont automatiques, elles ne concernent que des logs de même nature, les stations d'analyse ne pouvant pas analyser automatiquement des logs de nature différente. De ce fait, seuls les recalages entre runs sont possibles. De plus, les procédés actuels, basés sur des corrélations, ne permettent pas d'identifier, de hiérarchiser et d'affecter un index de qualité aux corrélations.

La présente invention a pour but de proposer une méthode qui permet de détecter automatiquement les ruptures dans les signaux diagraphiques ou logs et qui est susceptible d'être appliquée pour un recalage en profondeur des logs enregistrés.

La présente invention a pour objet une méthode de détection de ruptures dans des signaux diagraphiques concernant une zone d'un milieu et constitués de logs de natures différentes enregistrés pour ladite zone en fonction de la profondeur, du type consistant à :

- sélectionner une portion dans chacun desdits logs de telle sorte que toutes les portions sélectionnées aient en commun un même intervalle profondeur, une des portions sélectionnées étant considérée comme portion de référence,
- déterminer une suite de fréquences spatiales d'analyse,
- sélectionner une fonction ondelette mère et construire, à partir de ladite fonction mère, une famille de fonctions ondelettes d'analyse dépendant de la fréquence spatiale (ou nombre d'onde) et de la profondeur,

- calculer une transformée en ondelettes de la portion sélectionnée de chaque log et pour chaque fréquence d'analyse,
- choisir une grandeur caractéristique de la transformée en ondelettes et à utiliser cette grandeur comme représentation de la transformée en ondelettes,

ladite méthode étant caractérisée en ce qu'elle consiste en outre à :

- calculer pour chaque portion de log sélectionné et pour chaque cote profondeur, la valeur absolue du gradient moyen de la grandeur caractéristique de la transformée en ondelettes pour les différentes fréquences d'analyse,
- sélectionner, pour chaque portion de log traitée, les pics de la valeur absolue du gradient moyen de la grandeur caractéristique, chaque pic correspondant à une rupture,
- déterminer sur la portion de log de référence les ruptures correspondantes,
- définir une fenêtre d'analyse centrée sur chaque rupture de la portion de log de référence, et
- sélectionner les ruptures des autres portions de logs qui sont situées dans la fenêtre d'analyse.

Un avantage de la présente invention réside dans le fait que toutes les courbes représentatives des différents logs enregistrés sont prises en compte et traitées rapidement (simultanément ou séquentiellement les unes après les autres). De plus, la méthode selon l'invention permet de s'affranchir des effets d'épontes liés à la résolution (efficacité) des dispositifs de diagraphie pour découper en bancs les intervalles fournissant les logs et pour pouvoir analyser l'évolution verticale de leurs différentes caractéristiques géologiques.

Selon une autre caractéristique, le résultat de la transformée en ondelettes est un nombre complexe et la grandeur caractéristique de la transformée en ondelettes est la partie réelle dudit nombre complexe. La fonction mère peut être par exemple une fonction du type $f(z) = (1 - z^2)\exp(-z^2/2)$.

Selon une autre caractéristique, la valeur absolue du gradient moyen est normalisée, les pics de la valeur absolue du gradient moyen qui sont sélectionnés sont supérieurs ou égaux à un seuil prédéterminé. En particulier, la valeur absolue du gradient moyen est normalisée et le seuil de sélection des pics est égal ou supérieur à 0,2.

Selon une autre caractéristique, le log fournissant la portion de référence est obtenu par gammagraphie, ledit log (gamma ray) étant une excellente référence profondeur puisqu'il peut être enregistré dans tous les types de boue de forage et même à travers un tubage.

Selon une autre caractéristique, chaque portion de log traitée est incluse dans un intervalle d'étude contenant un nombre donné d'échantillons N. En particulier, lorsque le nombre d'échantillons à traiter dans une portion de log est soit inférieur ou bien supérieur au nombre d'échantillons N de l'intervalle d'étude, le log est soit centré dans ledit intervalle et les parties vides de ce dernier sont remplies par des échantillons ayant une valeur égale à la valeur moyenne du log, ou bien il est divisé en au moins deux parties comprenant chacune un nombre d'échantillons inférieur à N, de manière à traiter chaque partie comme indiqué ci-dessus.

Selon une autre caractéristique, la succession des fréquences spatiales d'analyse utilisées pour le calcul de la transformée en ondelettes, a comme limites une fréquence correspondant à une longueur d'onde de 4 m et une fréquence correspondant à une longueur de 200 m. La succession desdites fréquences est par exemple une progression géométrique. De préférence, on sélectionne dix fréquences spatiales dont les limites correspondent à des longueurs d'onde de 10 m et 100 m.

Chaque fréquence spatiale est analysée indépendamment des autres, sans filtrages successifs. De plus, le choix des fréquences permet d'avoir un nombre de coefficients d'ondelettes qui est suffisant pour réaliser une étude de leur organisation spatiale, dans le plan profondeur-fréquence. De cette manière, on obtient une information à trois dimensions reliant la profondeur, les fréquences présentes dans le signal diagraphique de départ et l'amplitude de la transformée.

Ainsi, la méthode selon l'invention permet d'étudier, pour chaque cote profondeur, le signal diagraphique à différentes échelles c'est-à-dire sur des intervalles de profondeur dont la taille est différente.

La méthode selon l'invention permet de hiérarchiser les ruptures suivant différents critères diagraphiques et de donner des priorités (ou des critères de qualité) dans les références qui sont utilisées notamment dans le recalage profondeur. Ainsi, il est possible de traiter automatiquement aussi bien le recalage "intra run" que le recalage "entre runs".

D'autres avantages et caractéristiques ressortiront mieux à la lecture d'un mode de réalisation préféré de la méthode selon l'invention, ainsi que des dessins annexés sur lesquels :

- la figure 1 est une représentation des ruptures sur un ensemble de logs non recalés, comportant un log gamma ray comme référence ;
- la figure 2 est une représentation de la partie réelle des coefficients de la transformée en ondelettes du log de référence ;

- la figure 3 est une représentation du gradient de la partie réelle des coefficients de la transformée en ondelettes du log de référence ;
- la figure 4 est une représentation de la valeur absolue du gradient moyen normalisé pour le log de référence.

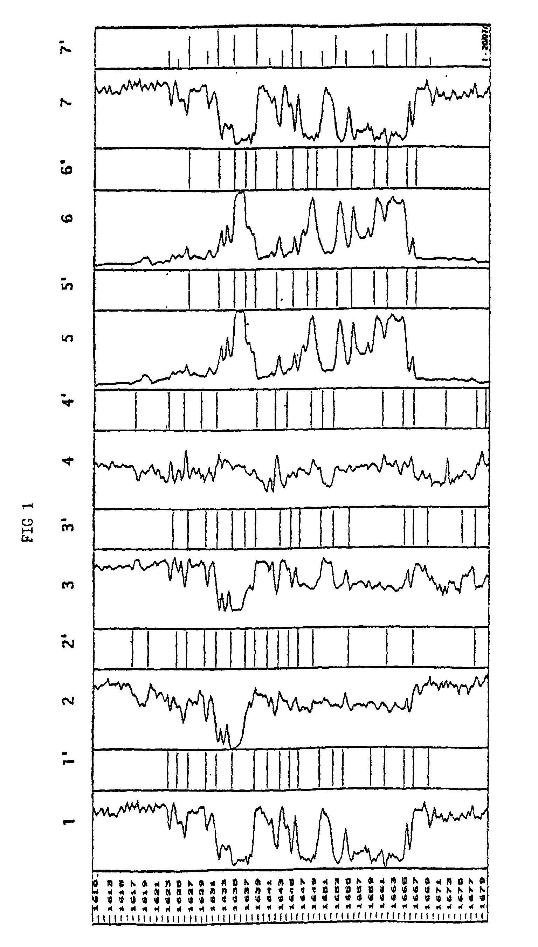

Pour un milieu donné à explorer, divers logs sont enregistrés en fonction de la profondeur et correspondent à une zone dudit milieu. Dans l'exemple de la figure 1, six logs référencés 1 à 6 ont été enregistrés. Le log 1 est obtenu par gammagraphie et constitue un log gamma ray ; le log 2 correspond à un enregistrement représentant l'index d'hydrogène et il est usuellement référencé par NPHI. Le log 3 correspond à la densité de la roche en place dans la zone considérée, et il est référencé par RHOB ; le log 4 correspond à la lenteur Dt dans ladite zone considérée ; les logs 5 et 6 correspondent à des résistivités désignées par LLS pour représenter la résistivité peu profonde et par LLD pour représenter la résistivité profonde.

Dans chaque log 1 à 6, on sélectionne une portion qui concerne un même intervalle profondeur, puis on choisit parmi ces portions de log une portion qui est utilisée comme portion de référence. Dans l'exemple représenté sur la figure 1, la portion de référence est celle du gamma ray.

Dans une autre étape, on sélectionne une fonction ondelette mère, par exemple la fonction ondelette de MORLET ou mieux encore la fonction appelée fonction ondelette du "Chapeau Mexicain", du type $f(z) = (1-z^2) \exp(-z^2/2)$ qui est équivalente à un lissage "gaussien" dont on prend la dérivée seconde. A partir de la fonction ondelette mère, on construit, ainsi que cela est connu et rappelé ci-dessus, une famille de fonctions d'analyse qui dépend de la fréquence spatiale et de la profondeur. Dans le cas présent, on choisit dix fréquences d'analyse dont les limites sont comprises entre une fréquence $F_1$ correspondant à une longueur d'onde $\lambda$ de 10 mètres et une fréquence $F_{10}$ correspondant à une longueur d'onde d'environ 100 m, la succession des fréquences d'analyse $F_1$ à $F_{10}$ décroissante suivant une progression géométrique, par exemple de raison 1,24.

Chaque log 1 à 6 ou plutôt chaque portion de log sélectionnée est ainsi traitée à l'aide de la transformée en ondelettes et ce, pour chaque fréquence d'analyse.

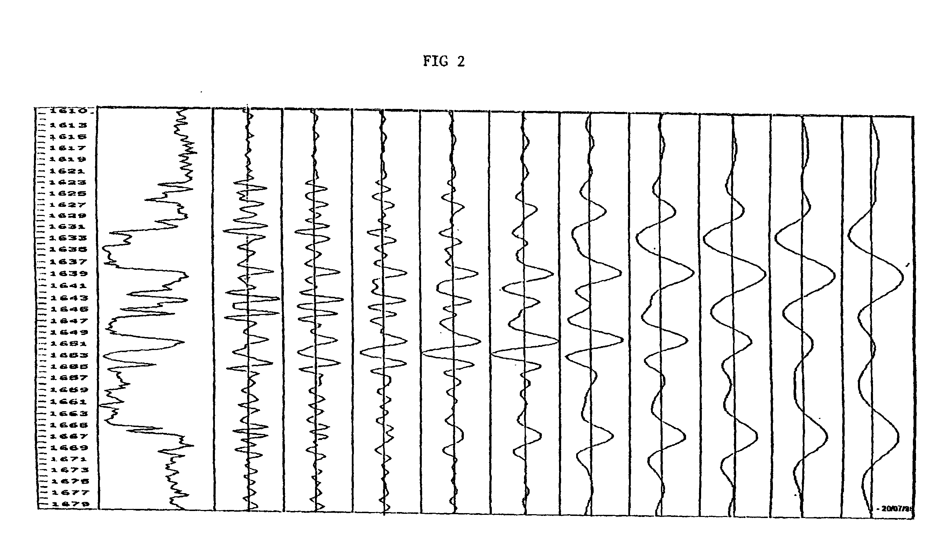

Le résultat de la transformée en ondelettes est un coefficient représenté par un nombre complexe dont on ne conserve, comme grandeur caractéristique, que la partie réelle. La figure 2 représente la partie réelle des coefficients de la transformée en ondelettes pour la portion de référence du log gamma ray, les valeurs étant croissantes de la gauche vers la droite. La colonne située immédiatement après le log gamma ray 1 sur la figure 2 correspond à la partie réelle des coefficients de la transformée en ondelettes pour la première fréquence $F_1$, la colonne suivante correspondant à la partie réelle des coefficients de la transformée en ondelettes pour la fréquence $F_2$, et ainsi de suite en allant vers la droite jusqu'à la fréquence $F_{10}$.

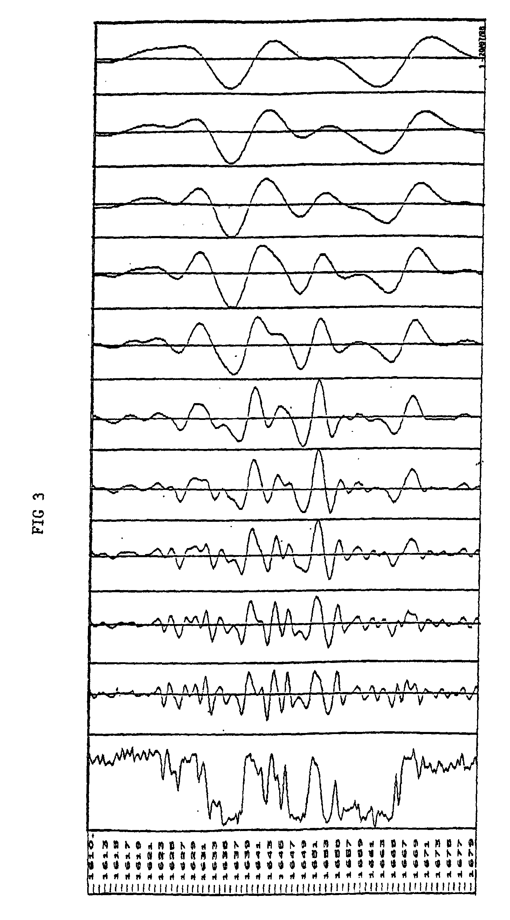

Pour chaque cote de chaque portion de log analysée, on calcule la valeur absolue du gradient moyen de la partie réelle du nombre complexe du résultat de la transformée en ondelettes. Sur la figure 3, on a représenté le gradient de la partie réelle des coefficients de la transformée en ondelettes pour la portion de référence sélectionnée dans le gamma ray, comme à propos de la figure 2. C'est ainsi que la colonne consécutive au gamma ray situé le plus à gauche, à côté de l'échelle des profondeurs en mètres, correspond au gradient de la partie réelle représentée sur la figure 2 et correspondant à la fréquence initiale $F_1$. A chaque fréquence $F_2$, $F_3$ ... $F_{10}$ correspond un gradient de la partie réelle.

On procède de même pour chacun des logs 2 à 6, c'est-à-dire que chaque log est traité à l'aide de la famille de fonctions ondelettes d'analyse issue de la même fonction ondelette mère, de manière qu'à chaque log corresponde une représentation du gradient de la partie réelle de la transformée en ondelettes pour chacune des fréquences d'analyse $F_1$ à $F_{10}$.

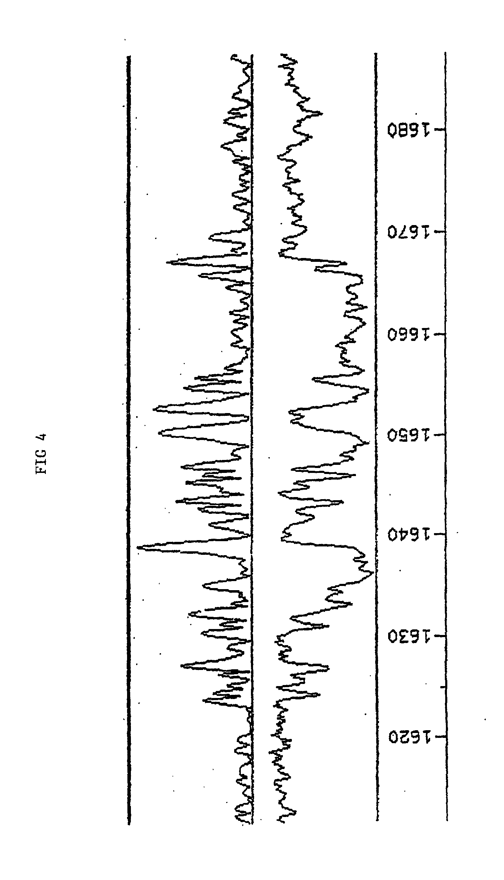

Dans une autre étape, on calcule pour chaque porion de log sélectionnée et pour chaque cote profondeur, la valeur absolue du gradient moyen de la partie réelle choisie comme grandeur caractéristique de la transformée en ondelettes, à partir des valeurs absolues des gradients déterminées pour l'ensemble des fréquences d'analyse $F_1$ à $F_{10}$. En se référant à la figure 3 et pour chaque cote profondeur, par exemple la cote profondeur 1613, on calcule le gradient moyen en prenant, par exemple, la moyenne arithmétique des valeurs du gradient pour chaque cote et pour chacune des fréquences $F_1$ à $F_{10}$. Puis on sélectionne, pour chaque portion de log sélectionnée, les pics de la valeur absolue du gradient moyen. Sur la figure 4 représentant le gradient moyen normalisé qui correspond au seul log gamma ray, on peut voir qu'entre 1610 et 1623 m, le gradient moyen pour chaque cote profondeur comprise entre 1610 et 1623 m est relativement faible, le premier pic apparaissant pour la cote 1623 m. De proche en proche, on constate qu'on a un pic significatif pour la cote 1625 m, d'autres pics à 1638 m, 1650 m, 1653 m et ainsi de suite. A chaque valeur du gradient moyen correspond une rupture recherchée.

De préférence, et pour chaque cote profondeur, seuls les pics de la valeur absolue du gradient moyen supérieurs à un seuil prédéterminé sont sélectionnés. Par exemple, on normalise la valeur absolue du gradient moyen et on ne retient que les pics supérieurs au seuil 0,2.

La figure 1 fournit, à côté de chaque portion de log sélectionnée 1 à 6, une représentation des pics sélectionnés pour chaque cote profondeur et donc des ruptures qui ont été déterminées grâce à la présente invention. La suite des ruptures dans la colonne référencée 1' correspond à la série des pics supérieurs à 0,2, pour la portion de log gamma ray. Comme on peut le constater, pour l'intervalle de la profondeur représentée, une rupture a été déterminée pour la cote 1623, une autre pour la cote 1625 m, une autre pour la cote 1626 m et ainsi de suite. La colonne 2' représente la série de ruptures déterminées pour la portion de log NPHI, la colonne 3' représentant la série de ruptures déterminées pour la portion de log RHOB et ainsi de suite.

Pour des raisons de clarté et d'encombrement, les portions de log sélectionnées sont comprises entre la cote profondeur 1610 m et la cote profondeur 1679 m. En réalité et de préférence, les portions de log sélectionnées sont incluses dans un intervalle d'étude qui comprend un nombre donné N d'échantillons diagraphiques, par exemple 4096 échantillons. Si on considère que le pas d'échantillonnage est de 15,24 cm (½ pied), cela représente une longueur de log de 624 mètres au lieu des 69 mètres indiqués sur les figures 1 à 3.

Comme indiqué précédemment, on traite N d'échantillons dans chaque portion de log sélectionnée.

Lorsque la portion de log à traiter comprend moins du nombre d'échantillons N fixé, 4096 dans le cas présent, la portion de log est recentrée dans l'ensemble des 4096 échantillons. Par exemple, si la portion de log sélectionnée comprend 2 000 échantillons, on crée un log de 4096 échantillons dont les 1048 premiers et 1048 derniers sont affectés de la valeur moyenne du log, les 2000 autres échantillons correspondant au log d'origine.

Lorsque la portion de log sélectionnée comprend plus d'échantillons que le nombre fixé N, par exemple supérieur à 4096, on coupe ladite portion en deux et on traite chaque moitié comme si elle comportait moins d'échantillons que 4096, de la manière indiquée ci-dessus.

Selon l'invention, il est préférable de rechercher les ruptures pertinentes dans chaque log. A cet effet, on définit une fenêtre de pertinence qui est centrée successivement sur chaque rupture du log considéré et pour chaque position de ladite fenêtre de pertinence, on calcule un coefficient de pertinence défini par l'expression :

$$(\log_{max} - \log_{min})_{fenêtre} / (\log_{max} - \log_{min})_{portion}$$

dans laquelle :

$\log_{max}$ et $\log_{min}$ dans la fenêtre représentent les amplitudes maximale et minimale du signal diagraphique situé dans la fenêtre,
$\log_{max}$ et $\log_{min}$ dans la portion de log traitée représentent les amplitudes maximale et minimale de la portion traitée du signal diagraphique.

Une telle opération contribue à l'élimination des problèmes liés au bruit sur les signaux diagraphiques enregistrés.

Pour chaque log, on conserve seulement les ruptures pour lesquelles le coefficient de pertinence est supérieur à une valeur donnée. Les colonnes 1' à 6' représentent les ruptures conservées à l'aide du calcul précédent pour les logs 1 à 6 respectivement.

De manière à ne conserver ou à ne sélectionner que les ruptures intéressantes qui se correspondent d'un log à l'autre, la présente invention préconise de hiérarchiser les ruptures conservées sur chacune des portions de log sélectionnées. Pour cela, on définit une fenêtre d'analyse qui recouvre un nombre donné M d'échantillons, par exemple égal à 5. Pour chaque rupture du log de référence, on centre la fenêtre d'analyse sur cette rupture et on recherche, sur les autres logs, les ruptures qui sont situées dans ladite fenêtre. Chaque rupture déterminée sur un ou plusieurs logs, dans la fenêtre considérée, est associée à la rupture du log de référence sur laquelle la fenêtre a été centrée. Après quoi, on peut hiérarchiser les ruptures entre elles, en opérant par exemple comme suit.

Dans les colonnes des ruptures, on peut voir qu'une rupture déterminée pour la cote 1623 m dans la colonne 1' n'est présente également que dans la colonne 4' et absente dans les autres colonnes 2', 3', 5' et 6'. Comme elle n'est présente que dans une colonne 4' autre que la colonne de référence 1', le coefficient un lui est affecté. La rupture déterminée à 1626 m environ dans la colonne 1', se retrouve présente dans les colonnes 2', 3', 5' et 6' ; le coefficient quatre lui est affecté. La rupture déterminée à 1631 m dans la colonne 1' se retrouve également présente dans chacune des autres colonnes 2' à 6' : le coefficient cinq lui est affecté on répète cette opération pour chacune des ruptures de la colonne 1'. La hiérarchisation est représentée dans la colonne 7' de la figure 1. Dans cette colonne 7', on peut constater qu'il y a quatre ruptures ayant le coefficient 5, cinq ruptures ayant le coefficient quatre, et ainsi de suite.

Parce qu'elles correspondent à des événements géologiques remarquables, les ruptures sont utilisées pour un recalage en profondeur des diagraphies. Un recalage profondeur des diagraphies consiste à remettre à la même profondeur des mesures effectuées par différents capteurs qui ne passent pas simultanément devant le même point du puits. Pour effectuer un recalage en profondeur automatique, on détecte sur chaque diagraphie des ruptures, de la manière indiquée ci-dessus. De même, on recherche les ruptures existant sur les autres logs visibles dans une fenêtre de profondeur centrée sur chaque rupture repérée sur la diagraphie de référence. Lorsqu'une rupture est détectée sur un ou plusieurs logs, elle est associée à la rupture détectée sur le log de référence. Les valeurs des logs sont recalculées de telle sorte que les ruptures associées à chacune des ruptures du log de référence apparaissent à la même cote profondeur que la rupture considérée du log de référence.

## Revendications

1. Méthode de détection de ruptures dans des signaux diagraphiques concernant une zone d'un milieu et constitués de logs de natures différentes enregistrés pour ladite zone en fonction de la profondeur, du type consistant à :

   - sélectionner une portion dans chacun desdits logs de telle sorte que toutes les portions sélectionnées aient en commun un même intervalle profondeur, une des portions sélectionnées étant considérée comme portion de référence,
   - déterminer une suite de fréquences spatiales d'analyse,
   - sélectionner une fonction ondelette mère et construire, à partir de ladite fonction mère, une famille de fonctions ondelettes d'analyse dépendant de la fréquence spatiale et de la profondeur,
   - calculer une transformée en ondelettes de la portion sélectionnée de chaque log et pour chaque fréquence spatiale d'analyse,
   - choisir une grandeur caractéristique de la transformée en ondelettes et à utiliser cette grandeur comme représentation de la transformée en ondelettes,

   ladite méthode se caractérisant en ce qu'elle consiste en outre à :

   - calculer pour chaque portion de log sélectionnée et pour chaque cote profondeur, la valeur absolue du gradient moyen de la grandeur caractéristique de la transformée en ondelettes pour les différentes fréquences spatiales d'analyse,
   - sélectionner, pour chaque portion de log traité, les pics de la valeur absolue du gradient moyen de la grandeur caractéristique, chaque pic correspondant à une rupture,
   - déterminer sur la portion de log de référence les ruptures correspondantes,
   - définir une fenêtre d'analyse centrée sur chaque rupture de la portion de log de référence, et
   - sélectionner les ruptures des autres portions de logs qui sont situées dans la fenêtre d'analyse.

2. Méthode selon la revendication 1, **caractérisée en ce que** le résultat de la transformée en ondelettes est un nombre complexe et **en ce que** la grandeur caractéristique de la transformée en ondelettes est la partie réelle dudit nombre complexe.

3. Méthode selon la revendication 1, **caractérisée en ce que** les pics de la valeur absolue du gradient moyen sélectionnés sont supérieurs ou égaux à un seuil prédéterminé.

4. Méthode selon la revendication 3, **caractérisée en ce que** la valeur absolue du gradient moyen est normalisée et **en ce que** ledit seuil est supérieur ou égal à 0,2.

5. Méthode selon la revendication 1, **caractérisée en ce que** le log fournissant la portion de référence est un log obtenu par gammagraphie.

6. Méthode selon la revendication 1, **caractérisée en ce que** chaque portion de log est incluse dans un intervalle d'étude contenant un nombre prédéterminé d'échantillons N.

7. Méthode selon la revendication 6, **caractérisée en ce que** lorsqu'un log destiné à fournir une portion sélectionnée est constitué par un nombre d'échantillons inférieur au nombre N, ledit log est centré dans l'intervalle d'étude et les parties vides dudit intervalle sont remplies par des échantillons ayant une valeur égale à la valeur moyenne du log.

8. Méthode selon les revendications 6 et 7, **caractérisée en ce que** lorsqu'un log destiné à fournir une portion sélectionnée est constitué par un nombre d'échantillons supérieur au nombre N, ledit log est divisé en au moins deux parties ayant chacune un nombre d'échantillons inférieur au nombre N, et **en ce que** chaque partie est traitée selon la revendication 7.

**9.** Méthode selon la revendication 1, **caractérisée en ce que** les fréquences spatiales d'analyse sélectionnées pour le calcul de la transformée en ondelettes, ont des fréquences limites correspondant à une longueur d'onde de 4 m et à une longueur d'onde de 200 m.

**10.** Méthode selon la revendication 9, **caractérisée en ce qu'**on sélectionne dix fréquences spatiales dont les fréquences limites correspondent à des longueurs d'onde de 10 m et 100 m.

**11.** Méthode selon la revendication 9 ou 10, **caractérisée en ce que** la suite des fréquences spatiales d'analyse est une progression géométrique.

**12.** Méthode selon l'une des revendications 1 à 11, **caractérisée en ce que** la fonction ondelette mère est une fonction du type f(z) = (1 - $z^2$) exp(-$z^2$/2) dans laquelle z est la profondeur.

**13.** Méthode de recalage, en profondeur, de logs de natures différentes enregistrés pour une zone d'un milieu en fonction de la profondeur **caractérisée en ce qu'**elle consiste à déterminer des ruptures sur une portion d'un log choisie comme référence et sur des portions correspondantes des autres logs en appliquant la méthode selon l'une des revendications 1 à 12 et à recalculer les valeurs desdites autres portions de log de telle sorte que les ruptures desdites portions, qui sont associées à chacune des ruptures de la portion de log choisie comme référence, apparaissent à la même cote profondeur que la rupture considérée du log de référence.

## Patentansprüche

**1.** Verfahren zur Detektion von Diskontinuitäten in Bohrlochmesssignalen, die eine Zone in einem Medium betreffen und aus Logs unterschiedlicher Natur bestehen, die für diese Zone in Funktion der Tiefe aufgezeichnet worden sind, bestehend aus folgenden Schritten:

- Auswählen eines Bereiches in jedem dieser Logs in der Weise, dass sämtliche ausgewählten Bereiche einen gleichen Tiefenintervall gemeinsam haben, wobei einer der ausgewählten Bereiche als Referenzbereich angesehen wird,
- Bestimmen einer Folge von Raumanalysenfrequenzen,
- Auswählen einer Mutter-Wavelet-Funktion und Konstruieren ausgehend von dieser Mutter-Wavelet-Funktion einer Familie von Analysen-Wavelet-Funktionen in Abhängigkeit von der Raumfrequenz und der Tiefe,
- Berechnen einer Wavelet-Transformierten des ausgewählten Bereiches eines jeden Log und für jede Raumanalysenfrequenz,
- Auswählen einer charakteristischen Größe der Wavelet-Transformierten und Verwendung dieser Größe zur Wiedergabe der Wavelet-Transformierten,

  wobei dieses Verfahren **dadurch gekennzeichnet ist, dass** es ferner aus folgenden Maßnahmen besteht:

- man berechnet für jeden Bereich des gewählten Log und für jedes Tiefenmaß den absoluten Wert des mittleren Gradienten der charakteristischen Größe der Wavelet-Transformierten für die verschiedenen Raumanalysenfrequenzen,
- man wählt für jeden Bereich des behandelten Log die Maxima des absoluten Werts des mittleren Gradienten der charakteristischen Größe aus, wobei jedes Maximum einer Diskontinuität entspricht,
- man bestimmt im Bereich des Referenzlog die entsprechenden Diskontinuitäten,
- man definiert ein zentriertes Analysenfenster an jeder Diskontinuität des Bereiches des Referenzlog und
- man wählt die Diskontinuitäten der anderen Bereiche der Logs, die sich im Analysenfenster befinden, aus.

**2.** Verfahren nach Anspruch 1, **dadurch gekennzeichnet, dass** es sich beim Ergebnis der Wavelet-Transformierten um eine komplexe Zahl handelt und dass die charakteristische Größe der Wavelet-Transformierten den reellen Teil dieser komplexen Zahl darstellt.

**3.** Verfahren nach Anspruch 1, **dadurch gekennzeichnet, dass** die ausgewählten Maxima des absoluten Werts des mittleren Gradienten einem vorbestimmten Schwellenwert entsprechen oder darüber liegen.

**4.** Verfahren nach Anspruch 3, **dadurch gekennzeichnet, dass** der absolute Wert des mittleren Gradienten normiert ist und der Schwellenwert 0,2 oder mehr beträgt.

**5.** Verfahren nach Anspruch 1, **dadurch gekennzeichnet, dass** es sich bei dem Log, der den Referenzbereich liefert, um einen durch Gammagraphie erhaltenen Log handelt.

**6.** Verfahren nach Anspruch 1, **dadurch gekennzeichnet, dass** jeder Logbereich in einem Untersuchungsintervall eingeschlossen ist, der eine vorbestimmte Anzahl von Proben N enthält.

**7.** Verfahren nach Anspruch 6, **dadurch gekennzeichnet, dass** dann, wenn der Logarithmus, der zur Lieferung eines gewählten Bereiches bestimmt ist, aus einer Anzahl von Proben, die weniger als N beträgt, ausgewählt ist, dieser Log im Untersuchungsintervall zentriert wird und die leeren Bereiche dieses Intervalls durch Proben aufgefüllt werden, die einen dem durchschnittlichen Wert des Log entsprechenden Wert aufweisen.

**8.** Verfahren nach den Ansprüchen 6 und 7, **dadurch gekennzeichnet, dass** dann, wenn der Log, der zur Lieferung eines ausgewählten Bereiches bestimmt ist, aus einer Anzahl von Proben, die über N liegt, besteht, dieser Log in mindestens zwei Bereiche aufgeteilt wird, von denen jeder eine Probenanzahl, die weniger als N beträgt, aufweist, wobei dann jeder Bereich gemäß Anspruch 7 behandelt wird.

**9.** Verfahren nach Anspruch 1, **dadurch gekennzeichnet, dass** es sich bei dem für die Berechnung der Wavelet-Transformierten ausgewählten Raumanalysenfrequenzen um Grenzfrequenzen entsprechend einer Wellenlänge von 4 m und einer Wellenlänge von 200 m handelt.

**10.** Verfahren nach Anspruch 9, **dadurch gekennzeichnet, dass** man 10 Raumfrequenzen auswählt, deren Grenzfrequenzen Wellenlängen von 10 m und 100 m entsprechen.

**11.** Verfahren nach Anspruch 9 oder 10, **dadurch gekennzeichnet, dass** die Folge von Raumanalysenfrequenzen eine geometrische Progression darstellt.

**12.** Verfahren nach einem der Ansprüche 1 bis 11, **dadurch gekennzeichnet, dass** die Mutter-Wavelet-Funktion eine Funktion vom Typ $f(z) = (1 - z^2) \exp(-z^2/2)$ ist, worin z die Tiefe bedeutet.

**13.** Verfahren zum tiefenmäßigen Ausrichten der Logs verschiedener Natur, die für eine Zone als Funktion der Tiefe aufgezeichnet worden sind, **dadurch gekennzeichnet, dass** es aus folgenden Schritten besteht: man bestimmt Diskontinuitäten in einem Bereich eines als Referenz gewählten Log und in den entsprechenden Bereichen der anderen Logs, wobei man das Verfahren nach einem der Ansprüche 1 bis 12 anwendet, und man berechnet die Werte dieser anderen Bereiche des Logs in der Weise erneut, dass die Diskontinuitäten dieser Bereiche, die mit jeder der Diskontinuitäten des Bereiches des als Referenz gewählten Log verbunden sind, im gleichen Tiefenmaß wie die betrachtete Diskontinuität des Referenzlog erscheinen.

**Claims**

**1.** Method of detecting breaks in logging signals relating to a region of a medium and consisting of logs of different kinds recorded for the said region as a function of depth, of the type consisting in:

- selecting a portion from each of the said logs in such a way that all the selected portions have a same depth interval in common, one of the selected portions being regarded as reference portion,

- determining a sequence of spatial analysis frequencies,

- selecting a parent wavelet function and constructing, from the said parent function, a family of wavelet analysis functions dependent on spatial frequency and on depth,

- calculating a wavelet transform of the selected portion of each log and for each spatial analysis frequency,

- choosing a characteristic quantity of the wavelet transform and in using this quantity as a representation of the wavelet transform, the said method being **characterized in that** it furthermore consists in:

- calculating, for each portion of log selected and for each depth datum, the absolute value of the mean gradient of the characteristic quantity of the wavelet transform for the various spatial analysis frequencies,

- selecting, for each portion of log processed, the peaks of the absolute value of the mean gradient of the characteristic quantity, each peak corresponding to a break,

- determining the corresponding breaks over the reference log portion,

- defining an analysis window centred on each break of the reference log portion, and

- selecting the breaks of the other log portions which lie in the analysis window.

2. Method according to Claim 1, **characterized in that** the result of the wavelet transform is a complex number and **in that** the characteristic quantity of the wavelet transform is the real part of the said complex number.

3. Method according to Claim 1, **characterized in that** the selected peaks of the absolute value of the mean gradient are greater than or equal to a predetermined threshold.

4. Method according to Claim 3, **characterized in that** the absolute value of the mean gradient is normalized and **in that** the said threshold is greater than or equal to 0.2.

5. Method according to Claim 1, **characterized in that** the log supplying the reference portion is a log obtained by gamma ray logging.

6. Method according to Claim 1, **characterized in that** each portion of log is included within an interval of study containing a predetermined number of samples N.

7. Method according to Claim 6, **characterized in that** when a log intended to supply a selected portion is made up of a number of samples which is less than the number N, the said log is centred in the interval of study and the empty parts of the said interval are filled with samples having a value equal to the mean value of the log.

8. Method according to Claims 6 and 7, **characterized in that** when a log intended to supply a selected portion is made up of a number of samples which is greater than the number N, the said log is divided into at least two parts each having a number of samples less than the number N, and **in that** each part is processed according to Claim 7.

9. Method according to Claim 1, **characterized in that** the spatial analysis frequencies selected for the calculation of the wavelet transform have limit frequencies corresponding to a wavelength of 4 m and to a wavelength of 200 m.

10. Method according to Claim 9, **characterized in that** ten spatial frequencies are selected, the limit frequencies of which correspond to wavelengths of 10 m and 100 m.

11. Method according to Claim 9 or 10, **characterized in that** the series of spatial analysis frequencies is a geometric progression.

12. Method according to one of Claims 1 to 11, **characterized in that** the parent wavelet function is a function of the type $f(z) = (1 - z^2)\exp(-z^2/2)$ in which z is the depth.

13. Method of depthwise readjustment of logs of different kinds recorded for a region of a medium as a function of depth, **characterized in that** it consists in determining breaks over a log portion chosen as reference and over corresponding portions of the other logs by applying the method according to one of Claims 1 to 12 and in recalculating the values of the said other portions of log in such a way that the breaks of the said portions, which are associated with each of the breaks of the log portion chosen as reference, appear at the same depth datum as the relevant break of the reference log.

FIG 1

EP 1 046 066 B1

FIG 2

12

FIG 3

FIG 4

EP 1 046 066 B1